# FASCICULE DE BREVET EUROPEEN

(11) **EP 1 292 209 B1**
(45) Date de publication et mention de la délivrance du brevet: **15.09.2004**
(21) Numéro de dépôt: 01947517.7
(22) Date de dépôt: 18.06.2001
(51) Int. Cl.: A47J 37/08

(54) **GRILLE-PAIN A PAROIS RENFORCEES**
BROTRÖSTER MIT VERSTÄRKTEN WÄNDEN
TOASTER WITH REINFORCED WALLS

(30) Priorité: 20.06.2000 FR 0007877
(43) Date de publication de la demande: 19.03.2003
(73) Titulaire: SEB S.A., 69130 Ecully (FR)
(72) Inventeur: MAUFFREY, Guy, F-70280 Breuchotte (FR)
(74) Mandataire: Kiehl, Hubert
(86) Numéro de dépôt international: PCT/FR2001/001900
(87) Numéro de publication internationale: WO 2001/097666

(56) Documents cités:
- FR-A- 2 703 576
- FR-A- 2 759 276
- US-A- 1 596 081
- US-A- 3 157 108
- US-A- 4 718 332

## Description

La présente invention se rapporte au domaine technique des appareils électroménagers de cuisson du type grille-pain et concerne plus particulièrement un moyen permettant de rigidifier les parois du boîtier du grille-pain.

La majorité des grille-pain actuels possèdent une ou plusieurs chambres de chauffe du pain, logées, avec les mécanismes de déplacement du chariot porte pain et l'électronique de commande, à l'intérieur d'un boîtier plastique. Les chambres de chauffe possèdent souvent un toit réalisé en métal ou en un matériau présentant une certaine inertie thermique.

Afin de réduire les coûts du plastique utilisé pour le boîtier, ce dernier est souvent éloigné des éléments chauffants et des éléments portés à haute température, tel le toit du grille-pain. Cependant, l'élasticité naturelle du plastique induit, lorsque le grille-pain est saisi par ses parois latérales, un risque de contact certain entre lesdites parois du boîtier et le toit, voire la chambre de chauffe, ce qui peut entraîner, si le grille-pain est en fonctionnement, ou vient d'être arrêté, un risque de fusion locale du boîtier.

Pour remédier à ce problème, de nombreux constructeurs proposent un rebord supérieur au boîtier du grille-pain, qui permet de suffisamment rigidifier les parois pour éviter tout contact avec le toit. Ce rebord est généralement situé au-dessus du toit. Des entretoises isolantes reliant les surfaces chaudes du toit aux parois peuvent compléter le raidissement des parois du boîtier.

Il est ainsi connu, par le document FR 2 703 576 qui décrit le préambule de la revendication 1, un grille-pain possédant, au niveau des fentes d'introduction du pain, une large plage périphérique sensiblement horizontale s'étendant jusqu'à ladite fente, la plage étant surmontée par une ceinture périphérique verticale afin d'orienter les éventuelles miettes de pain vers les fentes d'introduction du pain. Cette plage tend à rigidifier les parois du boîtier.

Une des conséquences de la présence de ce rebord est la surface limitée du toit par lesdits rebords et donc un encombrement latéral important du grille-pain par rapport à la surface utile du toit.

Par ailleurs, la présence de ce rebord supérieur rend la réalisation du boîtier nécessairement en deux étapes, le rebord ne permettant pas de mouler le fond du boîtier avec les parois verticales.

On connaît également, par le document US 4,718,332, un grille-pain comportant une circulation d'air de refroidissement par des chicanes ménagées dans les parois latérales, constituant ainsi une triple épaisseur de paroi qu globalement raidissent le boîtier du grille-pain en rendent assez improbable la déformation de la paroi la plus proche des éléments chauffants. Une telle structure reste toutefois très encombrante.

Un des buts de la présente invention est de remédier aux problèmes de l'art antérieur en proposant un grille-pain dont le boîtier est rigidifié pour éviter tout contact avec le toit, sans augmenter notablement le transfert thermique du toit vers le boîtier.

Un autre but de la présente invention est de diminuer la quantité de matière nécessaire pour la réalisation du boîtier.

Un autre but de la présente invention est de permettre la réalisation d'un boîtier de grille-pain comportant quatre parois latérales et une semelle en une seule étape de moulage.

La présente invention est atteinte à l'aide des caractéristiques de la partie caractérisante de la revendication 1.

Avantageusement, la forme de la bague ou portion de bague, telle que vue dans son plan, correspond sensiblement à la forme ou une partie de la forme du rebord périphérique du boîtier sur lequel elle est agencée. Notamment, selon le modèle de grille-pain, cette bague peut avoir une forme rectangulaire, ou une forme ovale, ou toute autre forme composée.

Cette bague ou portion de bague périphérique selon le pourtour du boîtier, située sur le dessus dudit boîtier, permet de limiter la déformation des parois du boîtier lorsque ces parois sont sollicitées en flexion, notamment lorsque l'utilisateur saisit le grille-pain par lesdites parois. En limitant leur déformation, on diminue le risque de contact entre ces parois et les parties de la chambre de chauffe, pouvant présenter une température élevée. Par suite, les parois du boîtier du grille-pain peuvent être amincies, réduisant la quantité de matière et donc les coûts.

De façon particulièrement avantageuse, la bague ou portion de bague de raidissement est réalisée en un matériau de faible conductivité thermique. Cette propriété permet de conférer à ladite bague ou portion de bague, en plus de sa fonction de rigidifier les parois du boîtier, une fonction d'isolation thermique des parois du boîtier vis-à-vis des parties du grille-pain montées en température, telles le toit du grille-pain.

Selon une réalisation particulière de l'invention, la bague ou portion de bague est réalisée en une matière plastique thermorésistante, permettant d'obtenir les deux propriétés recherchées de raidissement et d'isolation thermique, tout en offrant un matériau de faible coût et de mise en oeuvre simple.

Selon l'un des modes de réalisation de l'invention, la bague ou portion de bague de raidissement présente une section transversale au moins partiellement en U de telle sorte que le rebord supérieur du boîtier puisse s'emboîter dans ladite bague ou portion de bague. Cette partielle imbrication des deux éléments permet, lorsqu'un effort de compression est exercé sur les parois du grille-pain, de transférer cet effort sur la bague ou portion de bague.

En complément ou en variante du mode de réalisation précédent, la bague ou portion de bague possède des moyens de fixation aux parois du boîtier du grille-pain, permettant d'assurer sa liaison mécanique avec les parois du boîtier.

La présente invention est également relative à un grille-pain selon la revendication 1 comportant un bâti agencé dans un boîtier, au moins une chambre de grillage verticale ouverte dans la partie supérieure du boîtier, un toit périphérique à l'ouverture de la chambre de grillage, localisé essentiellement dans l'espace défini par le boîtier et possédant un rebord supérieur muni d'ouvertures, des moyens de chauffe situés à proximité de la chambre de grillage.

Un tel toit peut être conçu dans une forme et un matériau permettant d'effectuer le réchauffage d'aliments posés à même ledit toit.

Selon l'un des modes de réalisation, la bague ou portion de bague de raidissement possède une zone d'appui du toit du grille-pain. En permettant la liaison du toit aux parois du grille-pain par l'intermédiaire du moyen rigidifiant, on supprime l'espace annulaire généralement présent entre le toit et le boîtier, ce qui permet, en plus de rigidifier les parois du grille-pain, de mettre en valeur la fonction de réchauffage du toit, tout en réduisant les risques d'introduction de miettes ou d'objets à l'intérieur du grille-pain.

Selon un autre mode de réalisation, la bague ou portion de bague possède une ou plusieurs nervures, ayant une fonction de centrage du toit. La ou les nervures sont telles qu'elles ne laissent subsister qu'un jeu fonctionnel avec le toit, de sorte que le centrage du toit est automatiquement effectué par la bague ou portion de bague lorsque ces deux éléments sont disposés sur le grille-pain.

Par ailleurs, ce centrage du toit par les nervures permet d'assurer un éloignement défini des parois du boîtier du grille-pain dudit toit, la couche d'air ainsi définie renforçant l'isolation thermique de la bague lorsque cette dernière est réalisée dans un matériau thermiquement isolant. La valeur de la couche d'air peut être ajustée par la forme donnée à la bague.

Selon une variante de ce mode de réalisation, certaines de ces nervures réalisent un centrage du toit par l'extérieur de celui-ci, alors que d'autres réalisent un centrage par l'intérieur du toit. Les nervures sont alors situées, soit en vis-à-vis sur un rebord interne sensiblement horizontal de la bague ou portion de bague, de telle sorte à ménager entre elles un espace d'accueil du toit, soit décalées en alternance d'un guidage interne / guidage externe du toit.

En complément de ces variantes de réalisation, la chambre de grillage est délimitée par deux grilles de serrage sensiblement verticales et susceptibles de se rapprocher l'une vers l'autre lorsque les éléments chauffants sont alimentés, lesdites grilles de serrage comportant un rebord supérieur sensiblement perpendiculaire aux dites grilles et orienté vers l'extérieur de la chambre, de manière à fermer partiellement la chambre de chauffe, lorsqu'elles sont rapprochées l'une de l'autre, pour ainsi détourner le flux d'air chaud ascendant généré par les éléments chauffants.

Cette configuration permet de répartir volontairement le flux de chaleur généré par les éléments chauffants pour qu'il ne se concentre pas uniquement vers la partie centrale de la chambre, le rebord ainsi agencé agissant tel un déflecteur pour dévier le flux d'air chaud. Le flux de chaleur ascendant, partiellement dévié, est ainsi réparti, ce qui favorise un réchauffage homogène du pain posé sur la tôle.

Avantageusement, des réflecteurs sont associés aux éléments chauffants, lesdits réflecteurs présentant, vers leur extrémité supérieure, un étranglement par l'intermédiaire de deux pentes convergentes.

Cet étranglement est favorable à une bonne conservation de la chaleur dans le grille-pain en mode grillage, tout en permettant une orientation du flux thermique latéralement, pour un réchauffage homogène du pain déposé sur le rebord du toit.

La présente invention est également relative à un grille-pain selon la revendication 1 comportant un bâti agencé dans un boîtier ouvert en sa partie supérieure en étant défini par une ou plusieurs parois verticales reposant sur une semelle, au moins une chambre de grillage verticale ouverte dans la partie supérieure du boîtier, un toit périphérique à l'ouverture de la chambre de grillage, des moyens de chauffe situés à proximité de la chambre de grillage, ledit boîtier étant réalisé en matière plastique, les parois du boîtier étant exemptes de rebord en partie haute et étant moulées avec la semelle du boîtier.

La possibilité de mouler le boîtier avec la semelle génère un gain de temps et permet de réduire les coûts.

Le renforcement mécanique des parois du boîtier tel que proposé permet d'éviter le rebord supérieur tel qu'on le rencontre traditionnellement et qui impose un moulage du boîtier sans la semelle. Dès lors que les rebords ne sont plus nécessaires pour rigidifier le boîtier, grâce aux moyens présentés, il est alors possible de mouler le boîtier avec sa semelle en une seule pièce, sans incidence sur la rigidité au final du produit.

La présente invention sera mieux comprise à l'aide de la description qui va suivre, en référence aux figures annexées, données à titre d'exemple non limitatif, parmi lesquelles :
- la figure 1 est une vue en coupe transversale d'un grille-pain selon la présente invention,
- la figure 2 est une vue agrandie du moyen de raidissement,

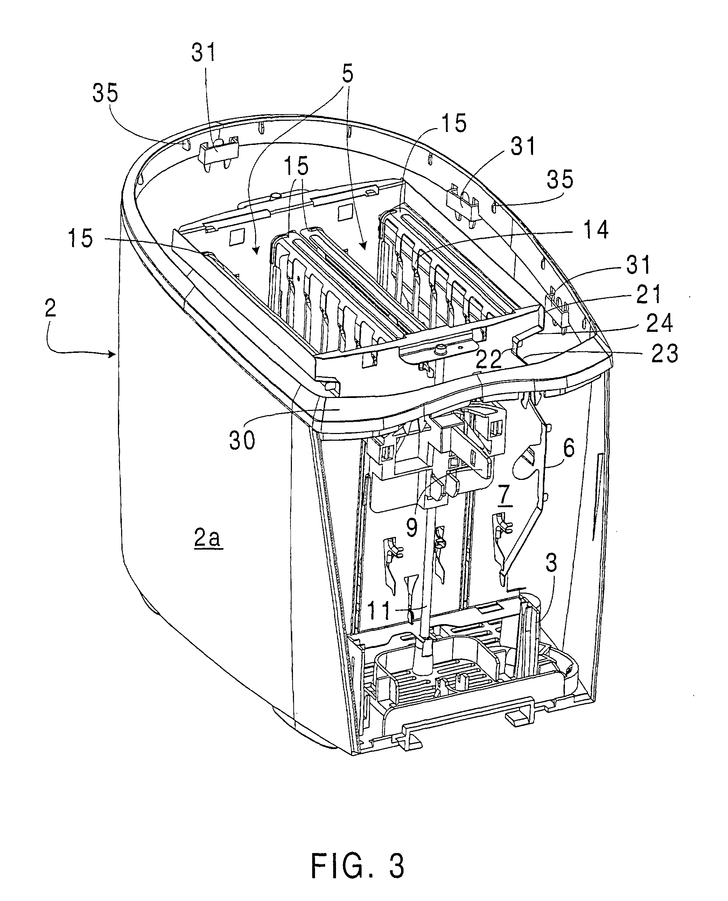

- la figure 3 est une vue en perspective d'un grille-pain équipé de la présente invention, la représentation du toit et de la partie avant du grille-pain ayant été omise pour améliorer la lecture de ladite figure,
- la figure 4 est une vue en perspective d'un grille-pain équipé de la présente invention, ainsi que du toit et de la partie avant non représentés à la figure 3,
- la figure 5 présente une vue agrandie d'une variante de réalisation du moyen de raidissement,
- la figure 6 est une vue en perspective d'un grille-pain équipé de la variante de réalisation de l'invention présentée figure 5.

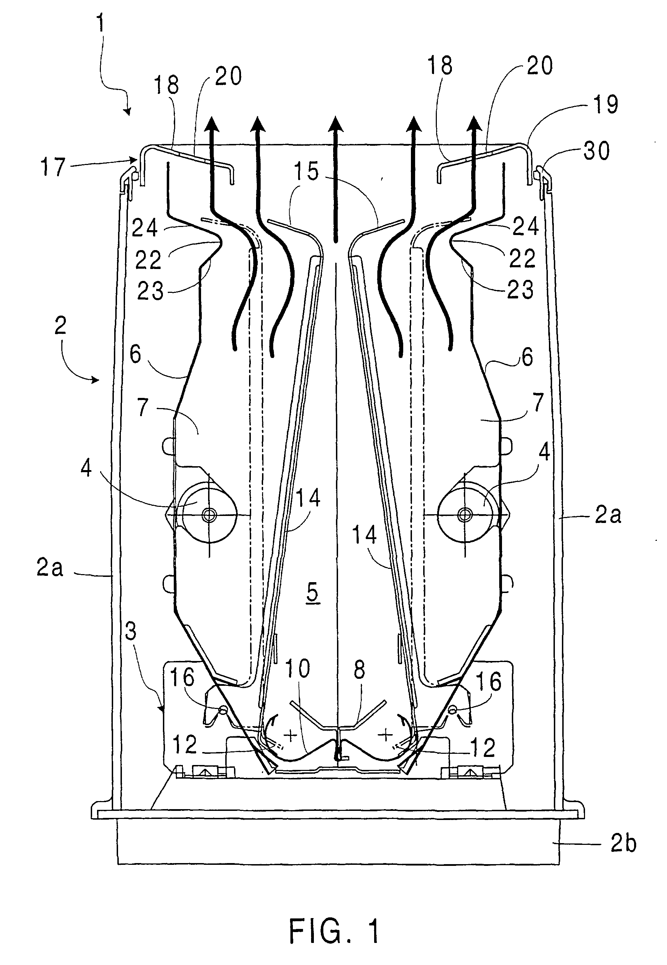

Comme il est bien visible figure 1, le grille pain 1 selon la présente invention comporte un boîtier 2 possédant une ouverture supérieure et à l'intérieur duquel est agencé un bâti 3 composé notamment de deux réflecteurs 6 longitudinaux ainsi que deux parois transversales 7 munies d'encoches dans lesquelles sont positionnés des éléments chauffants 4. Deux grilles 14 définissent une chambre de chauffe 5.

Selon l'invention, le boîtier est un boîtier plastique réalisé dans un matériau courant et bon marché tel le polypropylène, couramment désigné par l'abréviation PP. Le boîtier est délimité par des parois verticales 2a, une semelle 2b, et est ouvert dans sa partie supérieure. Dans cet espace, est disposé un toit sous la forme d'une tôle 17 présentant un rebord 18 et une paroi verticale ou collerette 19.

Ce toit sert principalement de couvertures aux chambres de chauffe 5, évitant notamment l'accès aux éléments sous tension, tout en réduisant l'introduction de miettes de pains ou divers objets dans le grille-pain, hors des chambres de chauffe. Dans cet unique but, le toit est préférentiellement situé à l'intérieur du boîtier.

Selon l'exemple proposé, le toit permet également le réchauffage de petits pains ou aliments analogues. A cette fin, le toit est surélevé par rapport au boîtier du grille-pain.

A titre de variante, le toit peut être réalisé à l'aide d'autres matériaux présentant des caractéristiques thermomécaniques compatibles avec les températures développées à la sortie des chambres de chauffe lors de la cuisson du pain. Des matériaux tels les plastiques techniques, les céramiques, les verres,... peuvent ainsi être utilisés.

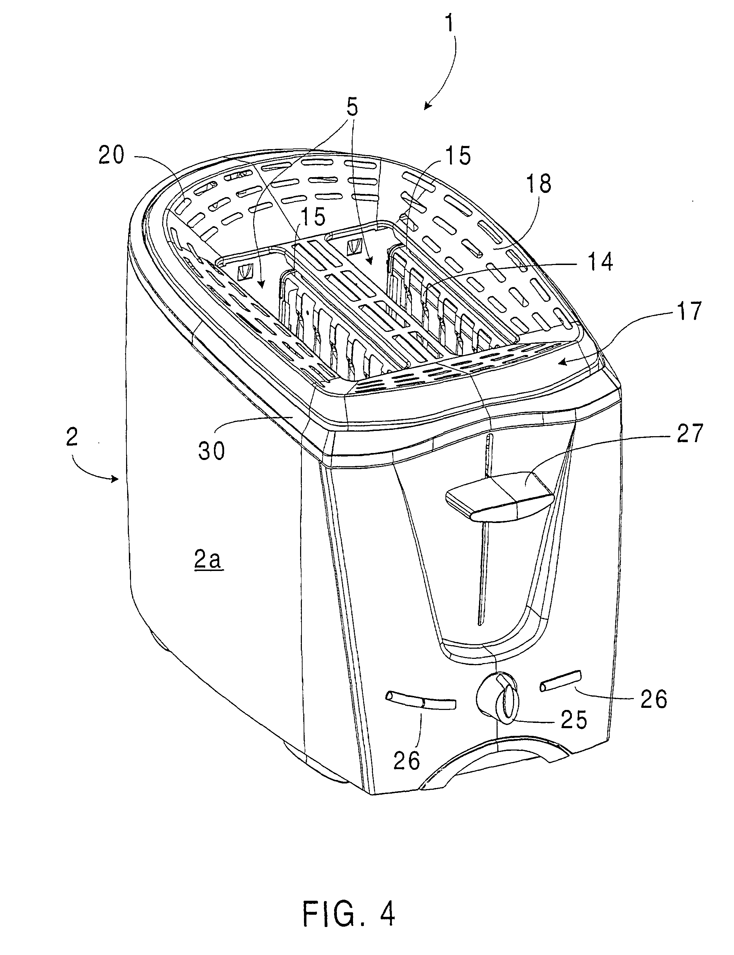

Le rebord 18 est orienté vers l'ouverture de la chambre de chauffe, d'une manière périphérique à celle-ci. Ce rebord 18 comporte des ouvertures 20, bien visibles figure 4 et dont la forme, les dimensions et la répartition peuvent varier selon l'agencement des éléments chauffants, la puissance de chauffe,...

Sont également visibles, figure 4, le bouton de réglage 25 du degré de grillage souhaité ainsi que diverses commandes 26 de fonctions spécifiques telles que : arrêt forcé, fonction décongélation, fonction bagel (un seul côté de chauffe),...

Avantageusement, le rebord 18 de cette tôle n'est pas plan et peut présenter des bossages situés entre les ouvertures, et/ou une déclivité selon la largeur du rebord. D'autres configurations peuvent être envisagées sans sortir du cadre de la présente invention, le principe étant de présenter des zones d'appui du pain surélevées par rapport au boîtier 2 et, avantageusement, par rapport aux ouvertures 20.

Deux grilles de serrage 14, définissant la chambre de chauffe, sont articulées autour d'un point 16 et possèdent une partie courbe 12 à leur extrémité située dans la partie basse du grille-pain, cette partie courbe 12 étant orientée vers l'intérieur de la chambre. Dans cette zone se trouve également une lame ressort 10 susceptible d'être déplacée par un chariot porte pain 8 lorsque ce dernier est amené dans la partie basse du grille-pain par la pièce 9 saillante du boîtier et actionnée par le bouton 27.

Les grilles de serrage 14, à leur extrémité opposée, c'est à dire dans le haut de la chambre de chauffe, sont courbées de telle sorte à présenter un rebord 15 sensiblement perpendiculaire au plan défini par les grilles, ce rebord étant orienté vers l'extérieur de la chambre.

Sur la figure 1 est indiqué, en pointillés, le positionnement des grilles 14 lorsque le chariot est dans sa position de chargement/déchargement, alors que la représentation en trait plein correspond à la position des grilles lorsque le grille-pain est en fonctionnement, c'est à dire lorsque les éléments chauffants sont alimentés.

Par ailleurs, les réflecteurs 6 présentent un étranglement 22 comportant, de part et d'autre, deux pentes orientées vers l'extérieur de la chambre, la première pente 23, du coté des éléments chauffants, permettant de rabattre la chaleur vers le centre du grille-pain, tandis que la deuxième, 24, située au-dessus de l'étranglement, orientant la chaleur vers les parties latérales du grille-pain.

Le fonctionnement d'un tel grille-pain est détaillé dans la demande FR 99 12257. La forme particulière des grilles et des réflecteurs permet de freiner la convection en évacuant la chaleur sur les côtés latéraux du grille-pain et en limitant le flux de chaleur central, tel qu'il est indique par des flèches en gras sur la figure 1.

Plus particulièrement selon l'invention, une bague 30 est disposée sur le boîtier, en appui sur les extrémités libres des parois 2a du boîtier du grille-pain. Cette bague périphérique est préférentiellement réalisée en un matériau rigide ou semi-rigide, permettant d'empêcher tout mouvement significatif des parois vers l'intérieur du grille-pain.

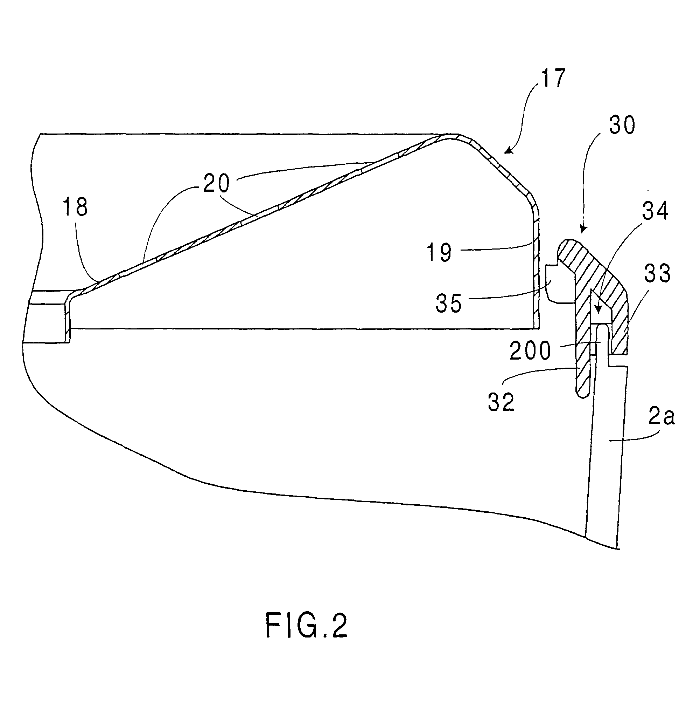

La coupe de la figure 2 présente plus en détail la section transversale de la bague et son positionnement sur le boîtier du grille-pain, selon un exemple non limitatif de réalisation de l'invention.

Ainsi, le profil de la bague 30 présente une gorge 34 délimitée par deux bords 32 et 33, donnant, à cette section transversale, une forme générale en U inversé.

Cette gorge permet à la bague de s'adapter sur la paroi 2a du boîtier ou, tel que présenté, sur une partie amincie 200 de ladite paroi 2a.

La gorge 34 de la bague, telle que représentée, est sensiblement identique sur toute sa périphérie. Selon l'exemple proposé, la bague est emboîtée sur le boîtier et maintenue sur celui-ci par des clips 31 répartis sur son pourtour.

Selon l'exemple présenté, la bague sert d'entretoise entre le toit 17 et le boîtier 2, pour assurer une rigidité de l'ensemble, tout en isolant thermiquement le boîtier du toit. A cette fin, la bague 30 présente, soit une nervure continue sur sa périphérie, soit, telles que représentées, plusieurs nervures intérieures 35, localisées en certains endroits de la bague.

Il existe donc, selon cette configuration, un jeu réduit au jeu nécessaire à l'assemblage, entre le toit 17 et les nervures 35, ce jeu étant préférentiellement voisin de 0,5 mm. Selon l'exemple présenté, les nervures de centrage sont espacées d'environ 50 mm les unes des autres. Cette configuration permet d'éloigner la paroi interne 32 de la bague de la paroi verticale 19 du toit 17 d'un espace environ égal à 1,5 mm afin de limiter les transferts thermiques vers ladite bague, tout en autorisant les dispersions dimensionnelles issues des outillages.

La bague est préférentiellement réalisée en un matériau plastique thermorésistant. Par matière plastique thermorésistante, on entend une matière plastique présentant des propriétés thermomécaniques adaptées au type de cuisson mis en oeuvre dans l'appareil. Ces matériaux peuvent être par exemple du type polyamide (PA), polypropylène-styrène (PPS), mélamine ou polybutadiène-téréphtalate (PBT) qui présente un bon rapport performance/prix.

Afin de protéger thermiquement la partie supérieure des parois 2a du boîtier, le bord intérieur 32 de la bague 30 recouvre la paroi 2a du boîtier sur une certaine longueur, limitant les transferts thermiques par rayonnement en provenance du toit.

L'utilisation d'une bague telle que présentée permet donc, en plus de rigidifier les parois, d'isoler thermiquement les parois du boîtier des éléments portés à haute température.

On conçoit alors l'intérêt de la présente invention par la possibilité offerte d'un toit large, au moins aussi large que la largeur du boîtier du grille-pain, et qui permet, lorsque le toit est utilisé dans une fonction de réchauffage, de présenter une surface importante, sans augmenter l'encombrement du grille-pain.

En variante de réalisation de l'invention, afin de diminuer les coûts d'obtention, les moyens permettant de rigidifier les parois sont réalisés par des portions de bague selon le pourtour du boîtier, localisées sur le boîtier comme précédemment expliqué ou sur la paroi interne du boîtier.

Le maintien du toit sur le grille-pain peut être réalisé de différentes façons.

Selon un premier mode de réalisation, relatif à l'exemple proposé, le toit rigide est fixé sur le dessus du bâti par tout moyen connu et peut servir à rigidifier les parois du boîtier par l'intermédiaire de la bague entretoise, car celle ci entraîne un centrage automatique du boîtier par rapport au dit toit.

La situation inverse, où le toit est monté flottant sur le bâti du grille-pain, de telle sorte que le positionnement de la bague entraîne un centrage automatique dudit toit, entre également dans le cadre de la présente invention.

Selon un autre mode de réalisation de l'invention, la bague ou portion de bague dispose, en plus des nervures de centrage, une zone support du toit permettant le maintien de ce dernier. Cette zone support peut être localisée de manière à ce que le toit, la bague et les parois du grille-pain présentent une continuité de forme, améliorant l'esthétisme du produit tout en limitant l'introduction des miettes à l'intérieur du grille-pain. Cette configuration permet également de présenter une surface du toit importante sans élargir les dimensions du boîtier.

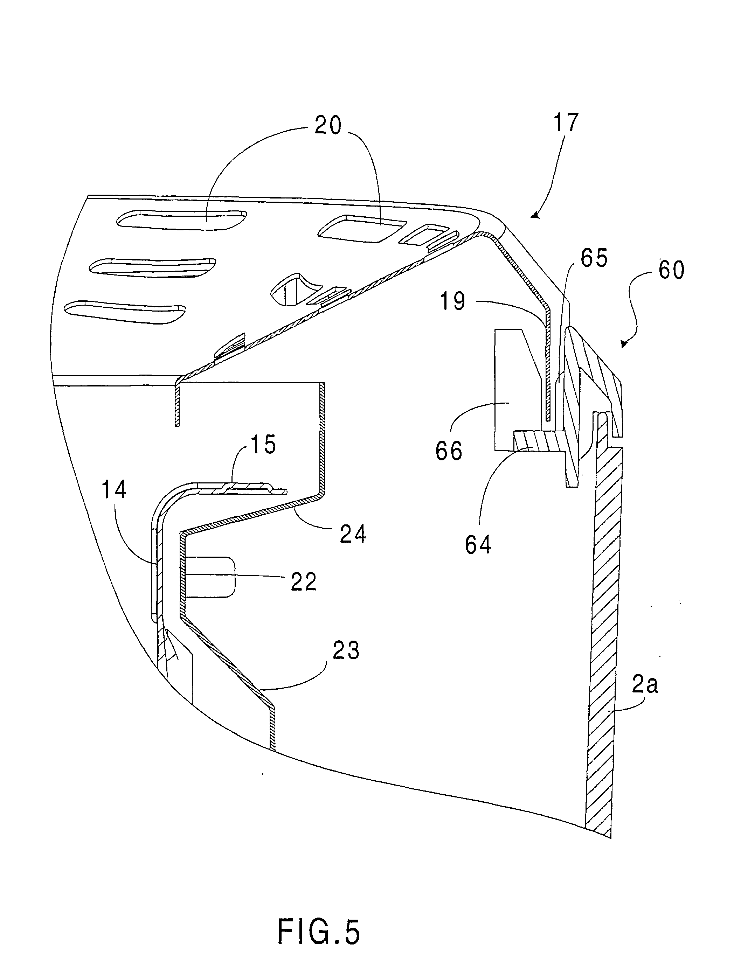

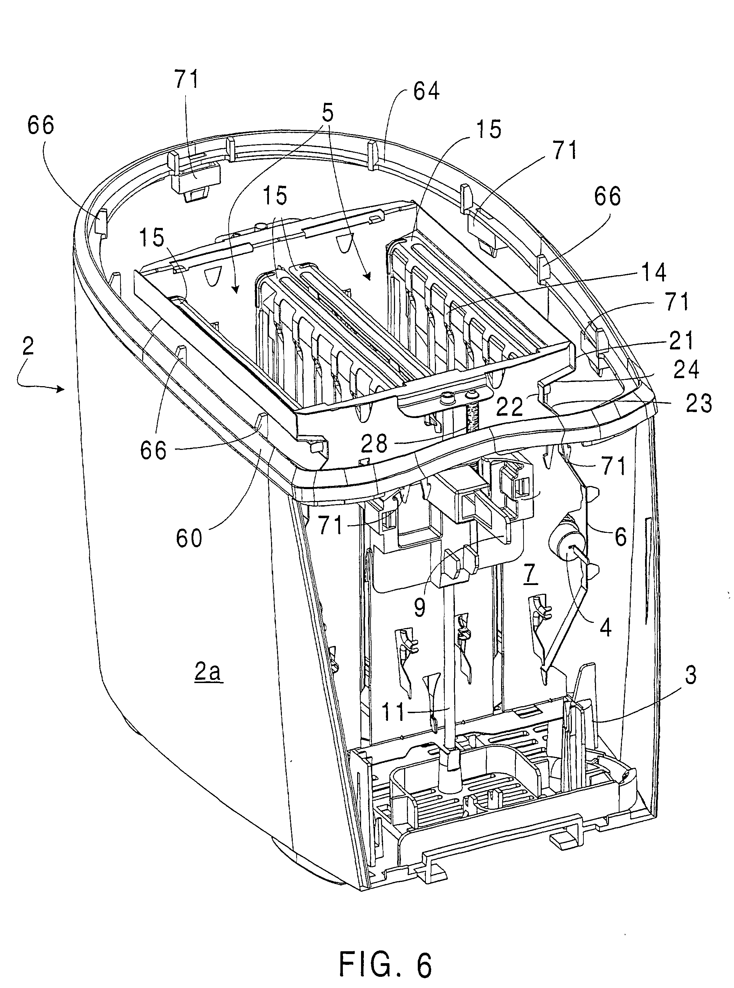

Les figures 5 et 6 présentent respectivement une telle variante de réalisation des moyens de raidissement ainsi qu'un grille-pain équipé dudit moyen.

Selon cette variante de réalisation, les moyens de raidissement sont constitués d'une bague 60 présentant, en plus de la section en U telle que précédemment évoquée, deux particularités importantes :
- un rebord horizontal 64 en partie basse, dirigé vers l'intérieur et sur lequel la collerette extérieure 19 du toit 17 peut prendre appui. Ce rebord augmente également le pouvoir de raidissement de la bague.
- des nervures 66 prenant appui sur le rebord 64. Ces nervures et les nervures 65 ménagent un espace périphérique dans lequel vient se loger la collerette extérieure 19 du toit 17.

Le centrage du toit est ainsi réalisé par un guidage vers l'intérieur et vers l'extérieur de la collerette. En réduisant l'espace périphérique entre les nervures 65 et 66, on réalise alors un maintien interne et externe de la collerette du toit.

De plus, dans cette variante de réalisation de la bague, l'ensemble est encore plus rigide car les parois extérieures 2a ne peuvent s'écarter du toit, par exemple sous l'effet de la chaleur, puisqu'elles sont alors retenues par la collerette 19 du toit 17, via les nervures 66 de la bague. Cette configuration permet, en outre, de garder constant le jeu périphérique autour du toit.

Avantageusement, selon l'un des modes de mise en oeuvre de l'invention, le boîtier est issu de moulage, ledit moulage intégrant en partie basse la semelle technique supportant la chambre de chauffe et le circuit électronique.

Ce boîtier est donc inversé par rapport à un grille-pain traditionnel où le boîtier comporte un rebord supérieur et pour lequel le moulage élabore une coque périphérique qui est ensuite assemblée à une semelle pour constituer ledit boîtier du grille-pain.

## Revendications

1. Grille-pain (1) comportant un boîtier (2) de grille-pain (1) et un moyen de raidissement dudit boîtier (2) de grille-pain (1), ledit boîtier étant ouvert en sa partie supérieure en étant défini par une ou plusieurs parois verticales (2a) reposant sur une semelle (2b), **caractérisé en ce que** le moyen de raidissement consiste en une bague (30, 60) ou portion de bague qui est en liaison mécanique avec les parties supérieures des parois (2a) du boîtier (2).

2. Grille-pain (1) selon la revendication 1, **caractérisé en ce que** la bague (30, 60) ou portion de bague est périphérique selon le pourtour du boîtier (2) et **en ce qu'**elle est située sur le dessus dudit boîtier (2).

3. Grille-pain selon l'une des revendications précédentes, **caractérisée en ce que** la bague (30, 60) ou portion de bague est réalisée en un matériau de faible conductivité thermique.

4. Grille-pain selon l'une des revendications précédentes, **caractérisée en ce que** la bague (30, 60) ou portion de bague est réalisée en une matière plastique thermorésistante.

5. Grille-pain selon l'une des revendications précédentes, **caractérisée en ce que** la bague (30, 60) ou portion de bague présente une section transversale au moins partiellement en U pour coopérer avec le rebord supérieur du boîtier.

6. Grille-pain selon l'une des revendications précédentes, **caractérisée en ce que** la bague (30, 60) ou portion de bague possède des moyens (31) de fixation aux parois (2a) du boîtier (2) du grille-pain (1).

7. Grille-pain selon la revendication 1, **caractérisé en ce qu'**il comporte un bâti (3) agencé dans ledit boîtier (2), au moins une chambre de grillage (5) verticale ouverte dans la partie supérieure du boîtier (2), un toit (17) périphérique à l'ouverture de la chambre de grillage (5), localisé essentiellement dans l'espace défini par le boîtier et possédant un rebord supérieur (18) muni d'ouvertures (20), des moyens de chauffe (4) situés à proximité de la chambre de grillage (5).

8. Grille-pain (1) selon la revendication 7, **caractérisé en ce que** la bague (30, 60) ou portion de bague possède une zone d'appui (64) du toit (17) du grille-pain (1).

9. Grille-pain (1) selon l'une des revendications 7 ou 8, **caractérisé en ce que** la bague (30, 60) ou portion de bague possède une ou plusieurs nervures (35, 65, 66), ayant une fonction de centrage du toit (17).

10. Grille-pain (1) selon la revendication 9, **caractérisé en ce que** certaines de ces nervures sont situées en vis-à-vis sur un rebord interne sensiblement horizontal de la bague (30, 60) ou portion de bague, de telle sorte à ménager entre elles un espace d'accueil du toit (17).

11. Grille-pain (1) selon l'une des revendications 7 à 10, **caractérisé en ce que** la chambre de grillage (5) est délimitée par deux grilles de serrage (14) sensiblement verticales et susceptibles de se rapprocher l'une vers l'autre lorsque les éléments chauffants (4) sont alimentés, lesdites grilles de serrage (14) comportant un rebord supérieur (15) sensiblement perpendiculaire aux dites grilles et orienté vers l'extérieur de la chambre (5), de manière à fermer partiellement la chambre de chauffe, lorsqu'elles sont rapprochées l'une de l'autre, pour ainsi détourner le flux d'air chaud ascendant généré par les éléments chauffants (4).

12. Grille-pain selon l'une des revendications 7 à 11 **caractérisé en ce que** des réflecteurs (6) sont associés aux éléments chauffants (4), lesdits réflecteurs présentant, vers leur extrémité supérieure, un étranglement (22) par l'intermédiaire de deux pentes (23, 24) convergentes.

13. Grille-pain (1) selon la revendication 1, **caractérisé en ce qu'**il comporte un bâti (3) agencé dans un boîtier (2) ouvert en sa partie supérieure en étant défini par une ou plusieurs parois verticales (2a) reposant sur une semelle (2b), au moins une chambre de grillage (5) verticale ouverte dans la partie supérieure du boîtier (2), un toit (17) périphérique à l'ouverture de la chambre de grillage (5), des moyens de chauffe (4) situés à proximité de la chambre de grillage (5), ledit boîtier (2) étant réalisé en matière plastique, les parois (2a) du boîtier (2) étant exemptes de rebord en partie haute et étant moulées avec la semelle (2b) du boîtier (2).

## Patentansprüche

1. Toaster (1), enthaltend ein Gehäuse (2) eines Toasters (1) und ein Mittel zum Versteifen des Gehäuses (2) des Toasters (1), wobei das Gehäuse in seinem oberen Teil geöffnet und durch eine oder mehrere vertikale Wände (2a) definiert ist, welche auf einer Sohle (2b) liegen, **dadurch gekennzeichnet, dass** das Versteifungsmittel aus einem Ring (30, 60) oder einem Ringabschnitt besteht, welcher mit den oberen Teilen der Wände (2a) des Gehäuses (2) mechanisch verbunden ist.

2. Toaster (1) nach Anspruch 1, **dadurch gekennzeichnet, dass** der Ring (30, 60) oder der Ringabschnitt entsprechend dem Umfang des Gehäuses (2) peripherisch ist und dass er auf dem oberen Teil des Gehäuses (2) angeordnet ist.

3. Toaster nach einem der vorhergehenden Ansprüche, **dadurch gekennzeichnet, dass** der Ring (30, 60) oder Ringabschnitt aus einem Material mit geringer thermischer Leitfähigkeit hergestellt ist.

4. Toaster nach einem der vorhergehenden Ansprüche, **dadurch gekennzeichnet, dass** der Ring (30, 60) oder Ringabschnitt aus einem wärmebeständigen Kunststoffmaterial hergestellt ist.

5. Toaster nach einem der vorhergehenden Ansprüche, **dadurch gekennzeichnet, dass** der Ring (30, 60) oder Ringabschnitt einen Querschnitt aufweist, der zumindest teilweise U-förmig ist, um mit dem oberen Rand des Gehäuses zusammen zu wirken.

6. Toaster nach einem der vorhergehenden Ansprüche, **dadurch gekennzeichnet, dass** der Ring (30, 60) oder Ringabschnitt Mittel (31) zur Befestigung an den Wänden (2a) des Gehäuses (2) des Toasters (1) aufweist.

7. Toaster nach Anspruch 1, **dadurch gekennzeichnet, dass** er ein im Gehäuse (2) angebrachtes Gestell (3), mindestens eine vertikale Röstkammer (5), die im oberen Teil des Gehäuses (2) geöffnet ist, eine peripherische Abdeckung (17) an der Öffnung der Röstkammer (5), welche im Wesentlichen in dem durch das Gehäuse definierten Raum liegt und einen mit Öffnungen (20) versehenen oberen Rand (18) aufweist, und Heizmittel (4) aufweist, die sich nahe der Röstkammer (5) befinden.

8. Toaster (1) nach Anspruch 7, **dadurch gekennzeichnet, dass** der Ring (30, 60) oder Ringabschnitt einen Bereich (64) zum Abstützen der Abdeckung (17) des Toasters (1) besitzt.

9. Toaster (1) nach Anspruch 7 oder 8, **dadurch gekennzeichnet, dass** der Ring (30, 60) oder Ringabschnitt eine oder mehrere Rippen (35, 65, 66) aufweist, die eine Funktion zum Zentrieren der Abdeckung (17) haben.

10. Toaster (1) nach Anspruch 9, **dadurch gekennzeichnet, dass** manche dieser Rippen einander gegenüber auf einem inneren, im Wesentlichen horizontalen Rand des Ringes (30, 60) oder Ringabschnittes angeordnet sind, so dass sie zwischen sich einen Raum zur Aufnahme der Abdeckung (17) ausbilden.

11. Toaster (1) nach einem der Ansprüche 7 bis 10, **dadurch gekennzeichnet, dass** die Röstkammer (5) durch zwei Klemmgitter (14) begrenzt ist, welche im Wesentlichen vertikal sind und sich einander nähern können, wenn die Heizelemente (4) gespeist sind, wobei die Klemmgitter (14) einen oberen Rand (15) aufweisen, der im Wesentlichen senkrecht zu den Gittern und nach außerhalb der Kammer (5) orientiert ist, so dass sie die Heizkammer teilweise schließen, wenn sie einander angenähert sind, um somit den aufsteigenden, von den Heizelementen (4) erzeugten Warmluftstrom umzuleiten.

12. Toaster nach einem der Ansprüche 7 bis 11, **dadurch gekennzeichnet, dass** den Heizelementen (4) Reflektoren (6) zugeordnet sind, die an ihrem oberen Ende eine Verengung (22) durch zwei konvergierende Abschrägungen (23, 24) aufweisen.

13. Toaster (1) nach Anspruch 1, **dadurch gekennzeichnet, dass** er ein Gestell (3) aufweist, das im Gehäuse (2) angebracht ist, welches in seinem oberen Teil geöffnet und durch eine oder mehrere vertikale Wände (2a) definiert ist, welche auf einer Sohle (2b) liegen, mindestens eine vertikale Röstkammer (5), die im oberen Teil des Gehäuses (2) geöffnet ist, eine peripherische Abdeckung (17) an der Öffnung der Röstkammer (5), Heizmittel (4), die nahe an der Röstkammer (5) liegen, wobei das Gehäuse (2) aus Kunststoffmaterial hergestellt ist, die Wände (2a) des Gehäuses (2) im oberen Abschnitt keine Ränder aufweisen und mit der Sohle (2b) des Gehäuses (2) gegossen sind.

## Claims

1. A toaster (1) having a toaster housing (2) and stiffening means for stiffening said toaster housing (2), said housing being open at its top while being defined by one or more vertical walls (2a) resting on a soleplate (2b), said toaster being **characterized in that** the stiffening means consist of a ring (30, 60) or portion of ring that is mechanically coupled to the top portions of the walls (2a) of the housing (2).

2. A toaster (1) according to claim 1, **characterized in that** the ring (30, 60) or portion of ring extends around the periphery of the housing (2) and **in that** it is situated on the top of said housing (2).

3. A toaster according to any preceding claim, **characterized in that** the ring (30, 60) or portion of ring is made of a material that is a poor conductor of heat.

4. A toaster according to any preceding claim, **characterized in that** the ring (30, 60) or portion of ring is made of a heat-resistant thermoplastic material.

5. A toaster according to any preceding claim, **characterized in that** the ring (30, 60) or portion of ring has a cross-section that is U-shaped at least in part in order to co-operate with the top edge of the housing.

6. A toaster according to any preceding claim, **characterized in that** the ring (30, 60) or portion of ring has fixing means (31) for fixing to the walls (2a) of the housing (2) of the toaster (1).

7. A toaster according to claim 1, **characterized in that** it has a frame (3) arranged in said housing (2), at least one vertical toasting chamber (5) that is open at the top of the housing (2), a roof (17) that is peripheral to the opening in the toasting chamber (5), which roof is located essentially in the space defined by the housing and is provided with a top web (18) provided with openings (20), and heater means (4) situated in the vicinity of the toasting chamber (5).

8. A toaster (1) according to claim 7, **characterized in that** the ring (30, 60) or portion of ring has an abutment zone (64) against which the roof (17) of the toaster (1) comes into abutment.

9. A toaster (1) according to claim 7 or 8, **characterized in that** the ring (30, 60) or portion of ring has one or more ribs (35, 65, 66) serving to center the roof (17).

10. A toaster (1) according to claim 9, **characterized in that** some of the ribs are situated facing one another on a substantially horizontal internal ledge on the ring (30, 60) or portion of ring so as to provide a space between them for receiving the roof (17).

11. A toaster (1) according to any one of claims 7 to 10, **characterized in that** the toasting chamber (5) is defined by two substantially vertical clamping grids (14) that are suitable for coming towards each other when the heater elements (4) are "on", each of said clamping grids (14) being provided with a top flange (15) substantially perpendicular to said grid and extending towards the outside of the chamber (5), so as to close the heating chamber in part, when they move towards each other, thereby deflecting the rising flow of hot air generated by the heater elements (4).

12. A toaster according to any one of claims 7 to 11, **characterized in that** reflectors (6) are associated with the heater elements (4), said reflectors forming a constriction (22) in the vicinity of their top ends by means of two convergent slopes (23, 24) on each reflector.

13. A toaster (1) according to claim 1, **characterized in that** it comprises a frame (3) organized inside a housing (2) that is open at its top while being defined by one or more vertical walls (2a) resting on a soleplate (2b), at least one vertical toasting chamber (5) that is open at the top of the housing (2), a roof (17) that is peripheral to the opening in the toasting chamber (5), and heater means (4) that are situated in the vicinity of the toasting chamber (5), said housing (2) being made of a plastics material, the walls (2a) of the housing (2) not being provided with flanges at their tops and being molded with the soleplate (2b) of the housing (2).
